# EUROPEAN PATENT APPLICATION

(11) **EP 2 360 847 A1**
(43) Date of publication of application: **24.08.2011**
(21) Application number: 08878719.7
(22) Date of filing: 09.12.2008
(51) Int. Cl.: H04B 3/54

(54) **COMMUNICATION SYSTEM, METHOD, AND COMMUNICATION DEVICE**

(71) Applicant: Pioneer Corporation, Kanagawa 212-0031 (JP); Panasonic Corporation, Kadoma-shi Osaka 571-8501 (JP)
(72) Inventor: OISHI, Hirokazu, Tsurugashima-shi Saitama 350-2288 (JP); KUROBE, Akio, Osaka 540-6207 (JP); KURODA, Go, Osaka 540-6207 (JP)
(74) Representative: Haley, Stephen
(86) International application number: PCT/JP2008/072331
(87) International publication number: WO 2010/067420

(57) **Abstract**

A communication system (I) is provided with a plurality of communication apparatuses (11 - 15) for performing communication by using a power line (4), the communication system sharing the power line with other communication systems (2, 3). In the communication system, at least one of the plurality of communication apparatuses has: an region detecting device (101) for detecting a communicable region that can be used by the communication system, from a plurality of communicable regions divided at least by time; a declaring device (104) for declaring at least one portion of the detected communicable region, as a communicable region that is used by the communication system, to the other communication systems; and a notifying device (105) for notifying the plurality of communication apparatuses of the declared communicable region, each of the plurality of communication apparatuses performing communication in the notified communicable region.

## Description

### Technical Field

The present invention relates to a communication system and method, and a communication apparatus which are associated with power-line carrier communication, and particularly relates to a communication system and method, and a communication apparatus which allow the coexistence of a plurality of communication systems having different communication methods or communication standards on the same power line.

### Background Art

For this type of communication system, there has been suggested, for example, a power-line carrier communication system which allows the coexistence of communications by a plurality of band-guarantee type modems and best-effort type modems. In the power-line carrier communication system, a regular interval of reference section is time-divided according to the number of the respective modems, and different band-guarantee type communication is performed in each divided communication section, wherein the former section of the reference section is set as the best-effort type communication and the latter section is set as the band-guarantee type communication, with reference timing based on a commercial power-supply voltage at the boundary of the former and latter sections (refer to a patent document 1).

Patent document 1: Japanese Patent Application Laid Open No. 2007-28492

### Disclosure of Invention

### Subject to be Solved by the Invention

However, according to the aforementioned background art, a focus is on the prevention of an obstacle to or interference with the band-guarantee type modem, and the best-effort type modem is not sufficiently disclosed. Then, if a distributed-control type modem in a CSMA (Carrier Sense Multiple Access) method is used as the best-effort type modem, the communication system does not likely function normally, which is technically problematic.

In view of the aforementioned problems, it is therefore an object of the present invention to provide a communication system and method, and a communication apparatus which allow the coexistence of a plurality of communication systems, including a communication system provided with a distributed-control type communication apparatus.

### Means for Solving the Subject

The above object of the present invention can be achieved by a communication system provided with a plurality of communication apparatuses for performing communication by using a power line, the communication system sharing the power line with other communication systems, at least one of the plurality of communication apparatuses having: an region detecting device for detecting a communicable region that can be used by the communication system, from a plurality of communicable regions divided at least by time; a declaring device for declaring at least one portion of the detected communicable region, as a communicable region that is used by the communication system, to the other communication systems; and a notifying device for notifying the plurality of communication apparatuses of the declared communicable region, each of the plurality of communication apparatuses performing communication in the notified communicable region.

According to the communication system of the present invention, the communication system is provided with the plurality of communication apparatuses for performing communication by using the power line (i.e. by performing power-line carrier communication), such as a PC (Personal Computer), a television, and a modem. Moreover, the power line used by the communication system is also used by the other communication systems having different communication methods or communication standards from those of the relevant communication system. In other words, there is a plurality of communication systems, on the power line used by the relevant communication system.

At least one of the plurality of communication apparatuses has: the region detecting device; the declaring device; and the notifying device. The region detecting device, the declaring device, and the notifying device may be provided only for one portion of the plurality of communication apparatuses provided for the communication system, or may be provided for all the communication apparatuses. Specifically, for example, if the communication system is a centralized-control type system, they are typically provided only for the communication apparatus that is a base or main apparatus. If the communication system is a distributed-control type system, they are typically provided for all the communication apparatuses.

The region detecting device detects the communicable region that can be used by the self-communication system to which the communication apparatus belongs, from the plurality of communicable regions divided by at least one of time and a frequency band. Here, the "communicable region that can be used by the self-communication system" means the communicable region that is used by the self-communication system, or the communicable region that is not used by the other communications systems which are different from the self-communication system.

Incidentally, the "communicable region" of the present invention is an region in which the communication apparatus in each communication system can transmit and receive communication signals via the power line (i.e. can communicate), such as a plurality of time regions (i.e. time slots) obtained by dividing a predetermined time interval (i.e. frame) in cases where the self-communication system and the other communication systems are multiplexed by time-division multiple access (TDMA), or a plurality of frequency bands obtained by dividing a predetermined frequency band in cases where the self-communication system and the other communication systems are multiplexed by frequency-division multiple access (FDMA). The "communication signals" of the present invention typically mean packets.

The region detecting device detects the communicable region that was used by the self-communication system in the last minute, or the communicable region that was not used by the other communication systems, by detecting the latest usage state of the plurality of communicable regions, or on the basis of a usage history.

The declaring device declares the at least one portion of the detected communicable region, as the communicable region that is used by the self-communication system, to the other communication systems. Here, the wording "declare" means transmitting or sending, via the power line, a signal indicating the "communicable region that is used by the self-communication systems" (hereinafter referred to as an "region declaration signal" as occasion demands), which can be recognized by the other communication systems, i.e. which does not depend on the communication method or communication standard.

Incidentally, the region declaration signal transmitted or sent by the declaring device may be recognized by all the communication apparatuses in the other communication systems or by one portion of the communication apparatuses.

The declaring device typically includes: a history obtaining device for obtaining a usage history which shows each of the plurality of communicable regions used; and a selecting device for selecting the communicable region that is used by the self-communication system, from the detected communicable region.

The selecting device typically selects the communicable region that is used by the self-communication system from the detected communicable region on the basis of the obtained usage history. Specifically, for example, the selecting device selects the communicable region that is least-frequently used from the detected communicable region. Alternatively, the selecting device selects the communicable region that is most-frequently used by the self-communication system. Alternatively, even in the case of the communicable region that is least-frequently used, if it is used by the other communication systems within a predetermined period, the communicable region is not selected but another communicable region is selected. The declaring device declares the communicable region selected by the selecting device, as the "communicable region that is used by the self-communication system", to the other communication systems.

The notifying device notifies the plurality of communication apparatuses provided for the self-communication system, of the declared communicable region. Here, the wording "notify" typically means transmitting or sending the region declaration signal indicating the "communicable region that is used by the self-communication system", which complies with the communication method or communication standard in the self-communication system.

Each of the plurality of communication apparatuses performs communication in the notified communicable region in accordance with the communication method or communication standard in the self-communication system. Specifically, for example, if the plurality of communication apparatuses are multiplexed in the time-division multiple access method, then, each of the communication apparatuses obtains a communication opportunity and performs communication in the CSMA method in a time region obtained by further time-dividing the notified communicable region.

The declaring device declares the communicable region that is used by the self-communication system, to the other communication systems in each predetermined cycle. Therefore, each of the region detecting device, the selecting device, and the notifying device also detects the communicable region that can be used by the self-communication system, selects the communicable region that is used by the self-communication system from the detected communicable region, and notifies the plurality of communication apparatuses provided for the self-communication system of the declared communicable region in predetermined cycle. In other words, each of the plurality of communication apparatuses provided for the communication system performs communication in the same communicable region within the predetermined cycle.

Incidentally, in the case of the multiplexing by the time-division multiple access, the communicable region is set typically such that the communicable region that can be used by the communication system exists at regular intervals within the predetermined cycle; namely, the communicable region is distributed to the communication system. Specifically, for example, in cases where the predetermined cycle is divided by 12, if the declaring device declares the communicable region at the head or start of the cycle (i.e. the first communicable region) as the communicable region that is used by the self-communication system, then, automatically, the first, fourth, seventh and tenth communicable regions can be used. Then, by using the first, fourth, seventh and tenth communicable regions as the same communicable region, the plurality of communication apparatuses provided for the relevant communication system perform communication in the communicable region.

Here, the communication apparatus that declares to the other communication systems is the communication apparatus that performs communication first within the predetermined cycle if the communication system is a distributed-control type system. Therefore, the communication apparatus that declares is not necessarily the same communication apparatus all the time. If the communication system is a centralized-control type system, typically, the communication apparatus that is a base or main apparatus declares all the time.

According to the study by the present inventors, generally, the power-line carrier communication has a plurality of communication standards (or methods), such as a HD-PLC (High Definition-Power Line Communication) standard, a HOMEPLUG (registered trademark) standard, and a UPA (Universal Powerline Association) standard. If there region plurality of communication systems having different communication standards (or methods) on the same power line, the communication signals in the other communication systems are recognized as noise, thereby causing an obstacle to or interference with each other and likely making the communication impossible.

On the other hand, there has been suggested a technology in which the multiplexing is performed by the time-division multiple access, thereby allowing the coexistence of communications by a band-guarantee type modem and a best-effort type modem. However, if a distributed-control modem in the CSMA method is used as the best-effort type modem, a communication opportunity is hardly obtained because it is hard to recognize which communication system uses each of the time-divided time regions (i.e. time slots), and the communication system does not likely function normally.

Moreover, if there are the plurality of communication systems, it has been found that a particular time region cannot be uniquely distributed to a particular communication system because the possibility that a new communication standard will appear from now cannot be denied.

In the present invention, however, the communicable region that is used by the self-communication system is declared by the declaring device to the other communication systems. Thus, the plurality of communication systems can mutually recognize which communicable region is used. Therefore, it is possible to avoid the obstacle or interference by the communication signals in the plurality of communication systems, which allows the coexistence of the plurality of communication systems having different communication standards or communication methods.

Moreover, each of the plurality of communication apparatuses provided for the self-communication system is notified of the declared communicable region by the notifying device. Thus each of the plurality of communication apparatuses can recognize the communicable region that is used by the self-communication system. Moreover, the same communicable region is used within the same cycle. Thus, each of the plurality of communication apparatuses can use the same communicable region, as well as obtaining a communication opportunity and performing communication, for example, in the CSMA method in the notified communicable region.

Incidentally, if the selecting device is constructed not to select the communicable region that is used by the other communication systems within the predetermined period even if it is the communicable region that is less-frequently used on the basis of the history stored in a storing device, then, it is possible to reduce the possibility that the communication signals in the self-communication system collide with the communication signals in the other communication systems.

As a result, according to the communication system of the present invention, it allows the coexistence of a plurality of communication systems, including a communication system provided with a distributed-control type communication apparatus.

Moreover, the communication system provided with the distributed-control type communication apparatus is generally used for burst data transmission, such as apparatus control data, Web data, and e-mail data. According to the communication system of the present invention, the communication system which is supposed to transmit the burst data can use the power lime, which is a communication medium, with efficiency and without any mutual collision.

In addition, each of the plurality of distributed-control type communication apparatuses provided for the communication system of the present invention uses the same communicable region within the predetermined cycle. This corresponds well to such a characteristic of the burst data that once a certain communicable region starts to be used, the same communicable region keeps being used for a while. Therefore, each communication apparatus can ensure the communicable region, efficiently. In particular, this effect remarkably appears by constructing the selecting device to select the communicable region that is most-frequently used by the self-communication system.

In one aspect of the communication system of the present invention, the communication system is multiplexed in a time-division multiple access method with the other communication systems, and the plurality of communicable regions region plurality of time regions obtained by dividing a predetermined time interval.

According to this aspect, the communication system is multiplexed in the time-division multiple access method with the other communication systems for the coexistence. In this case, the plurality of communicable regions are the plurality of time regions (i.e. time slots) obtained by dividing the predetermined time interval (i.e. frame). The time width of each of the plurality of communicable regions is typically uniform, but it may be arbitrary.

Incidentally, the declaring device declares the communicable region that is used by the self-communication system to the other communication systems at regular intervals at the start of each predetermined time interval. The declaring device or the communication apparatus provided with the declaring device may detect the start of each predetermined time interval by detecting a reference signal, such as a frame synchronization pulse. Alternatively, if the predetermined time interval starts from the zero cross point of a commercial power-supply voltage, the declaring device or the communication apparatus may detect the start of each predetermined time interval by detecting the zero cross point.

In another aspect of the communication system of the present invention, the declaring device includes: a history obtaining device for obtaining a usage history which shows each of the plurality of communicable regions used; and a selecting device for selecting the communicable region that is used by the communication system, from the detected communicable region on the basis of the obtained usage history.

According to this aspect, the history obtaining device obtains the usage history which shows each of the plurality of communicable regions used. The obtained usage history is typically stored into a storing device, such as a volatile memory. The stored usage history may be deleted in a certain period of time after the storage, or it may be stored as far as the capacity of the storing device allows and it may be deleted in order from the older usage history when the capacity becomes insufficient.

The selecting device selects the communicable region that is used by the self-communication system, from the detected communicable region on the basis of a part or all of the obtained usage history. The declaring device declares the selected communicable region to the other communication systems.

In an aspect associated with the selecting device, the selecting device may select the communicable region which is less frequently used, from the detected communicable region on the basis of the obtained usage history.

By virtue of such construction, it is possible to reduce the possibility that the communication signals in the self-communication system collide with the communication signals in the other communication systems, which is extremely useful in practice.

In an aspect associated with the selecting device, the selecting device may select the communicable region which is frequently used by the communication system, from the detected communicable region on the basis of the obtained usage history.

By virtue of such construction, it is possible to realize a state close to the state that a particular communicable region is distributed to the self-communication system, thereby allowing each of the communication apparatuses in the self-communication system to perform stable communication, for example, in the CSMA method.

Incidentally, if the communicable region which is frequently used by the self-communication system is temporarily used by the other communication systems, the selecting device may not select another communicable region (i.e. stop the communication in the self-communication system once) and may select the communicable region which is frequently used by the self-communication system again after a predetermined time.

In an aspect associated with the selecting device, the selecting device may select a portion excluding a communicable region that is used by the other communication systems within a first predetermined period, from the detectable communicable region on the basis of the obtained usage history.

By virtue of such construction, the selecting device selects another communicable region other than the communicable region that is possibly reused by the other communication systems. Thus, it is possible to further reduce the possibility that the communication signals in the self-communication system collide with the communication signals in the other communication systems, which is extremely useful in practice.

Here, the first predetermined period" of the present invention is a period in which it is judged that the communicable region is reused by the other communication systems, or a period in which the probability of the reuse by the other communication systems is greater than or equal to a predetermined threshold value, and it is typically set as a fixed value in advance. The first predetermined period is as long as several cycles in which the declaring device declares. For example, the usage history which shows each of the plurality of communicable region used may be obtained by simulations using a predetermined probability density function, and the first predetermined period may be set on the basis of the obtained usage history.

In another aspect of the communication system of the present invention, the declaring device declares the communicable region that is used by the communication system, to the other communication systems at regular intervals.

According to this aspect, the declaring device declares the communicable region that is used by the self-communication system to the other communication systems at regular intervals. In other words, between the declaration by the declaring device and the next declaration, each of the communication apparatuses provided for the communication system performs communication by using the same communicable region all the time.

If it is constructed such that the declaring device declares the communicable region that is used by the communication system every time any one of the plurality of communication apparatuses provided for the communication system performs communication, then, for example, in the case of the communication apparatus for performing communication in the CSMA method, there is the possibility that it cannot normally perform communication in the relevant communication system.

In the present invention, however, the same communicable region is used all the time between the declaration by the declaring device and the next declaration. Thus, the communication apparatus can normally perform communication even if it is the communication for performing communication in the CSMA method.

In another aspect of the communication system of the present invention, the at least one communication apparatus further has a collision detecting device for detecting collision of communication signals on the power line, and if the collision is detected, the declaring device does not declare in a second predetermined period.

According to this aspect, the collision detecting device detects the collision of the communication signals in the self-communication system and the communication signals in the other communication systems. Specifically, for example, the collision detecting device detects an error signal indicating the failure of the communication due to the collision of the communication signals.

If the collision is detected, the declaring device does not declare in the second predetermined period. In other words, the communicable region that is used by the self-communication system is not obtained in the second predetermined period, so that each of the communication apparatuses in the self-communication system cannot perform communication.

Here, the "second predetermined period" of the present invention is a period until retry is performed when the collision of the communications signals occurs, i.e. a period between the detection of the collision by the collision detecting device and the next declaration by the declaring device, and for example, it is a period set on the basis of random numbers.

The above object of the present invention can be also achieved by a communication apparatus for performing communication by using a power line, the communication system sharing the power line with other communication systems, the communication apparatus provided with: an region detecting device for detecting a communicable region that can be used by the communication system, from a plurality of communicable regions divided at least by time; a declaring device for declaring at least one portion of the detected communicable region, as a communicable region that is used by the communication system, to the other communication systems; a recognizing device for recognizing the declared communicable region as the communicable region that is used by the communication system; and a transmitting / receiving apparatus for transmitting /receiving communication signals in the recognized communicable region.

According to the communication apparatus of the present invention, the region detecting device detects the communicable region that can be used by the self-communication system, from the plurality of communicable regions. The declaring device declares at least one portion of the detected communicable region, as the communicable region that is used by the self-communication system, to the other communication systems.

By this, the communicable region that is used by the self-communication system is declared to the other communication systems. Thus, the plurality of communication systems can mutually recognize which communicable region is used, which allows the coexistence of the plurality of communication systems having different communication standards or communication methods.

Typically, a plurality of communication apparatuses typically belong to the self-communication system, and one of the plurality of communication apparatuses declares the communicable region that is used by the self-communication system to the other communication systems and notifies each of the plurality of communication apparatuses which belong to the self-communication system of the declared communicable region; namely, the one communication apparatus transmits a signal indicating the declared communicable region. The recognizing device in each communication apparatus receives the transmitted signal, thereby recognizing the declared communicable region as the communicable region that is used by the self-communication system. By this, each communication apparatus can obtain a communication opportunity and perform communication, for example, in the CSMA method in the recognized communicable region.

The transmitting / receiving apparatus transmits or receives the communication signals in the recognized communicable region. In other words, each of the plurality of communication apparatuses in the self-communication system including the relevant communication apparatus performs communication in the recognized communicable region.

As a result, according to the communication apparatus of the present invention, it allows the coexistence of a plurality of communication systems, including a communication system provided with a distributed-control type communication apparatus.

The above object of the present invention can be also achieved by a communication method in a communication system provided with a plurality of communication apparatuses for performing communication by using a power line, the communication system sharing the power line with other communication systems, the communication method provided with: an region detecting process of detecting a communicable region that can be used by the communication system, from a plurality of communicable regions divided at least by time; a declaring process of declaring at least one portion of the detected communicable region, as a communicable region that is used by the communication system, to the other communication systems; and a notifying process of notifying the plurality of communication apparatuses of the declared communicable region, each of the plurality of communication apparatuses performing communication in the notified communicable region.

According to the communication method of the present invention, as in the communication system of the present invention described above, it allows the coexistence of a plurality of communication systems, including a communication system provided with a distributed-control type communication apparatus.

Incidentally, the communication method of the present invention can also adopt the same various aspects as those of the communication system of the present invention described above.

The operation and other advantages of the present invention will become more apparent from the best mode for carrying out the invention explained below.

### Brief Description of Drawings

[FIG. 1] FIG. 1 is a schematic diagram showing the configuration of a communication system in an embodiment of the present invention.
[FIG. 2] Fig. 2 is a conceptual view showing the concept of a time slot in the embodiment of the present invention.
[FIG. 3] FIG. 3 is a block diagram showing the structure of a modem in the embodiment of the present invention.
[FIG. 4] FIGs. 4 are conceptual views showing one example of a usage history in the embodiment of the present invention.
[FIG. 5] FIG. 5 is a flowchart showing the operations of the modem in the embodiment of the present invention.

- 1, 2, 3: communication system
- 4: power line
- 11 -15, 21 , 31: modem
- 101: region detecting part
- 102: history obtaining part
- 103: selecting part
- 104: declaring part
- 105: notifying part
- 106: recognizing part
- 107: memory
- 108: collision detecting part
- 109: controlling part
- 110: transmitting / receiving part
- 111: inputting / outputting part

### Best Mode for Carrying Out the Invention

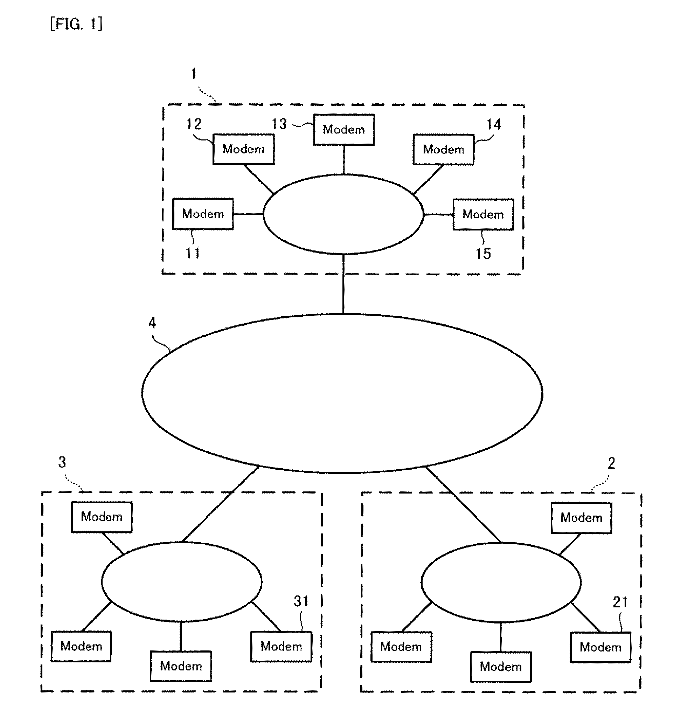

Hereinafter, an embodiment of the communication system of the present invention will be explained with reference to FIG. 1 to FIG. 5.

Firstly, the configuration of a communication system in the embodiment of the present invention will be explained with reference to FIG. 1. FIG. 1 is a schematic diagram showing the configuration of the communication system in the embodiment.

In FIG. 1, a communication system I is provided with a plurality of distributed-control, best-effort type modems 11 to 15, as one example of the "communication apparatus" of the present invention. The plurality of modems 11 to 15 are connected to each other via a power line 4.

The communication system 1 is connected to other communication systems 2 and 3 via the power line 4, and it is multiplexed by time-division multiple access. Therefore, in the embodiment, in a time slot as one example of the "communicable region" of the present invention, each of the modems 11 to 15, 21, and 31 provided for the respective communication systems 1, 2, and 3 performs communication.

Incidentally, each of the plurality of modems 21 provided for the communication system 2 and the plurality of modems 31 provided for the communication system 3 may be a distributed-control, best-effort type modem, or a centralized-control, best-effort type modem. Alternatively, it may be a band-guarantee type modem. Moreover, the communication systems 2 and 3 typically have different communication methods or communication standards from those of the communication system 1.

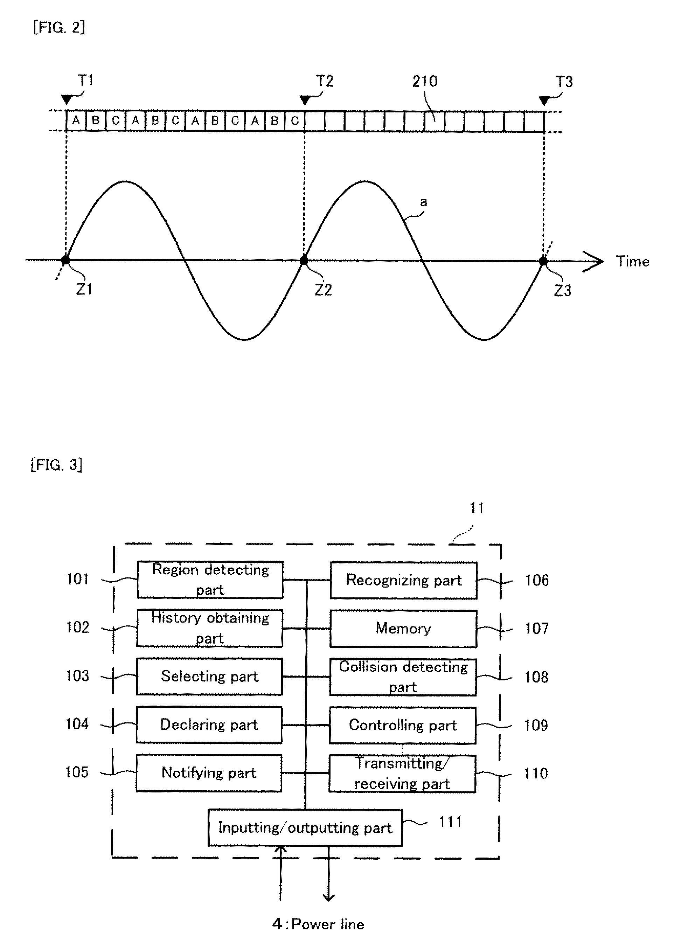

Now, with reference to FIG. 2, the time slot in the embodiment will be explained. Fig. 2 is a conceptual view showing the concept of the time slot in the embodiment.

In FIG. 2, a plurality of time slots 210 are set by dividing one frame (e.g. by dividing it by 12), for example, by using one cycle based on the zero cross point of a commercial power-supply voltage a (from a time point T1 at a zero cross point Z1 to a time point T2 at a zero cross point Z2) as the one frame. To each of the plurality of time slots 210, for example, an identifier (here, A, B, and C) is applied, and there are time slots to which the same identifier is applied at regular intervals in one frame. Incidentally, FIG. 2 shows the identifiers only in one frame, but the identifiers are also applied to the other time slots 210 in the same manner.

In the same frame, each of the communication systems I to 3 performs communication by using the time slots to which the same identifier is applied. Thus, for example, in cases where the communication system I uses the time slots in which the identifier A is applied in a certain frame, even if the relevant time slots include such a time slot that the communication is not actually performed, i.e. such a time slot that is not used, the other communication systems 2 and 3 cannot use the time slot that is not used.

Next, with reference to FIG. 3, the modem 11 will be explained with reference to FIG. 3. FIG. 3 is a block diagram showing the structure of the modem 11 in the embodiment. Incidentally, the structure of each of the modems 12 to 15 in the communication system 1 is the same as that of the modem 11, and thus the explanation will be omitted.

In FIG. 3, the modem 11 is provided with: an region detecting part 101 ; a history obtaining part 102; a selecting part 103; a declaring part 14; a notifying part 105; a recognizing part 106; a memory 107; a collision detecting part 108; a controlling part 109; a transmitting / receiving part 110; and an inputting / outputting part 111. Here, the "region detecting part 101", the "history obtaining part 102", the "selecting part 103", the "declaring part 104", the "notifying part 105", the recognizing part 106", the "collision detecting part 108", and the "transmitting / receiving part 110" in the embodiment are one examples of the "region detecting device", the "history obtaining device", the "selecting device", the "declaring device", the "notifying device", the recognizing device", the "collision detecting device", and the "transmitting / receiving device" in the present invention, respectively.

In its operation, firstly, the usage history of the time slots 210 is obtained by the history obtaining part 102, and the obtained usage history is stored into the memory 107. Here, the usage history of the time slots 210 typically means the usage history for each of the identifiers applied to the time slots 210. In other words, it means the usage history of a time slot group to which the same identifier is applied.

Incidentally, when the modem 11 is started, or when the modem 11 is connected to the power line 4, the history obtaining part 102 obtains the usage history of the time slots 210 of the predetermined number of times or predetermined cycle (e.g. 10 times). At this time, the controlling part 109 controls the transmitting / receiving past 110 or the like not to perform communication.

Then, the region detecting part 101 detects the time slot that can be used by the communication system 1 to which the modem 11 belongs, on the basis of the latest usage history stored in the memory 107. Specifically, the region detecting part 101 detects the identifier applied to the time slot that is used by the communication system I, or the identifier applied to the time slot that is not used by the communication systems 2 and 3.

The selecting part 103 selects the time slot that is used by the communication system 1, from the time slot that is detected by the region detecting part 101, on the basis of the usage history stored in the memory 107.

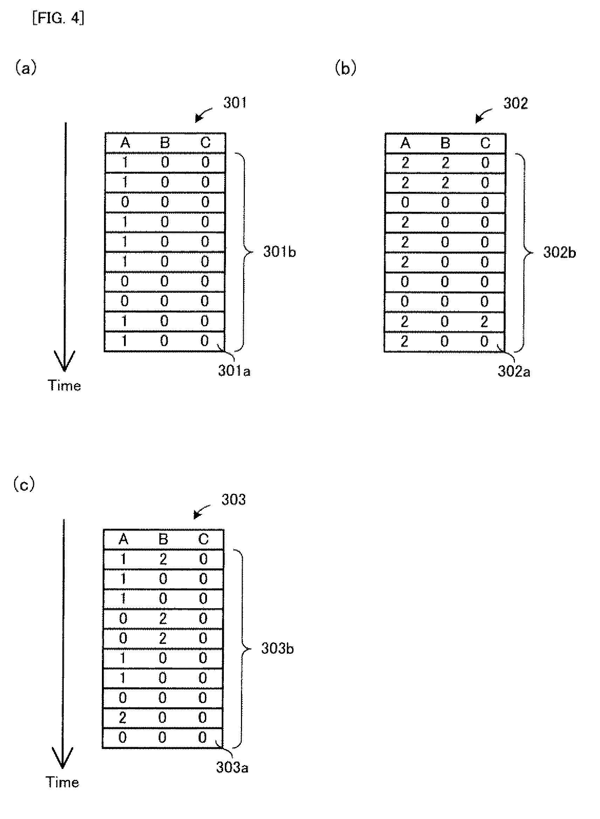

Now, with reference to FIGs. 4, an explanation will be given on the method of detecting and selecting the time slot. FIGs. 4 are conceptual views showing one example of the usage history in the embodiment. Incidentally, in FIGs. 4, "1" indicates that it is used by the communication system 1 to which the modem 11 belong, "2" indicates that it is used by the other communication system 2 or 3 which is different from the communication system 1, and "0" indicates that it is not used by any communication system. Moreover, each of A, B, and C shown at the top of the usage history indicates the identifier applied to the time slots 210.

If the memory 107 stores therein a usage history 301 as shown in FIG. 4(a), the region detecting part 101 detects all the time slots as "the time slot that can be used by the communication system 1", on the basis of a latest usage history 301a.

The selecting part 103 selects a time slot that is most frequently used by the communication system 1 to which the modem 11 belongs, i.e. the time slot to which the identifier A is applied, on the basis of a usage history 301b associated with the detected time slots (in this case, all the time slots). Incidentally, if there is the time slot that was used by the communication system 1 in the last minute (in this case, the time slot to which the identifier A is applied), the relevant time slot may be selected only for that reason.

Alternatively, if the memory 107 stores therein a usage history 302 as shown in FIG. 4(b), the region detecting part 101 detects the time slots to which the identifier B or C is applied, as "the time slot that can be used by the communication system 1", on the basis of a latest usage history 302a.

The selecting part 103 selects, simply, a least-frequently used time slot, i.e. the time slot to which the identifier C is applied, on the basis of a usage history 302b associated with the detected time slots.

Here, for example, if a first predetermined period is set as 5 cycles (i.e. the last 5 times), the time slot to which the identifier C is applied was used by the other communication system 2 or 3 at the second last time. Thus, the selecting part 103 may judge that the time slot to which the identifier C is applied is likely reused by the other communication system 2 or 3, and the selecting part 103 may select the time slot to which the identifier B is applied.

Alternatively, if the memory 107 stores therein a usage history 303 as shown in FIG. 4(c), the region detecting part 101 detects all the time slots as "the time slot that can be used by the communication system 1", on the basis of a latest usage history 303a.

Here, referring to a usage history 303b associated with the detected time slots, the time slot to which the identifier A is applied is most frequently used by the communication system 1, but it was used by the other communication system 2 or 3 at the second last time.

In this case, the selecting part 103 may also select the time slot to which the identifier A is applied, in the condition that it can be used by the communication system 1 after a predetermined time, without selecting any time slot (i.e. by stopping the communication once), on the basis of the usage history 303b associated with the detected time slots. Incidentally, the selecting part 103 may select the least frequently used time slot to which the identifier C is applied.

Back in FIG. 3 again, the declaring part 104 declares the time slot selected by the selecting part 103, as the time slot that is used by the communication system 1, to the other communication systems 2 and 3. Incidentally, typically, the declaring part 104 declares at regular intervals, at the start of each frame, such as time points T1, T2, and T3 in FIG. 2.

The notifying part 105 notifies each of the modems 11 to 15 provided for the communication system 1, of the time slot declared by the declaring part 104. The recognizing part 106 recognizes the notified time slot, as the time slot that is used by the communication system 1.

The controlling part 109 controls the transmitting / receiving part 110 to perform communication, in accordance with the communication method or communication standards of the communication system 1, in the recognized time slot. Specifically, for example, if the modems 11 to 15 in the communication system 1 are multiplexed in the time-division multiple access method in the communication system 1, each of the modems 11 to 15 obtains a communication opportunity and performs communication in the CSMA method in the notified time slot.

As described above, the time slot that is used by the communication system 1 is declared by the declaring part 104 to the communication systems 2 and 3. Thus the plurality of communication systems can mutually recognize which time slot is used. Therefore, it is possible to avoid the obstacle or interference by the communication signals in the plurality of communication systems, which allows the coexistence of the plurality of communication systems having different communication standards or communication methods.

In addition, each of the modems 11 to 15 which constitute the communication system I is notified of the declared time slot by the notifying part 105. Thus each of the modems 11 to 15 can recognize the time slot that is used by the communication system 1. Moreover, the time slot to which the same identifier is applied is used within the same cycle, so that each of the modems 11 to 15 can obtain a communication opportunity and perform communication in the notified time slot.

By the way, at the same time that the declaring part 105 declares the time slot that is used by the communication system 1, or within a time that can be regarded as the same time, if the declaring part 104 declares that one of the plurality of modems 21 provided for the communication system 2 or one of the plurality of modems 31 provided for the communication system 3 will use the same time slot as that declared by the declaring part 104, then, at least two communication systems will compete against each other. Then, the communication signals in the plurality of communication systems will collide, i.e. the communication will fail.

The collision detecting part 108 in the modem 11 detects an error signal indicating the failure of the communication, thereby detecting that the communication signals in the communication system 1 collide with the communication signals in the communication system 2 or 3. If the collision is detected, the controlling part 109 controls the declaring part 104 not to declare in a collision avoidance period, which is, for example, a period set on the basis of random numbers, or one cycle, and which is as one example of the "second predetermined period" of the present invention. By this, it is possible to reduce the possibility that the collision occurs again.

Incidentally, in the embodiment, the declaring part 104 in the modem 11 declares the time slot that is used by the communication system 1, and the notifying part 105 gives notice of the declared time slot. The modem for declaring and giving notice may be any of the modems 11 to 15 provided for the communication system 1. Typically, the modem that performs communication first in a certain frame declares and gives notice.

If one of the modems 12 to 15 which are different from the modem 11 declares and give notice of the time slot that is used by the communication system 1, the recognizing part 106 in the modem 11 recognizes the time slot of which the one modem is notified by the notifying part in the one modem, as the time slot that is used by the communication system 1.

As a result, according to the communication system in the embodiment, it allows the coexistence of the plurality of communication systems, including the communication system provided with the distributed-control type modem.

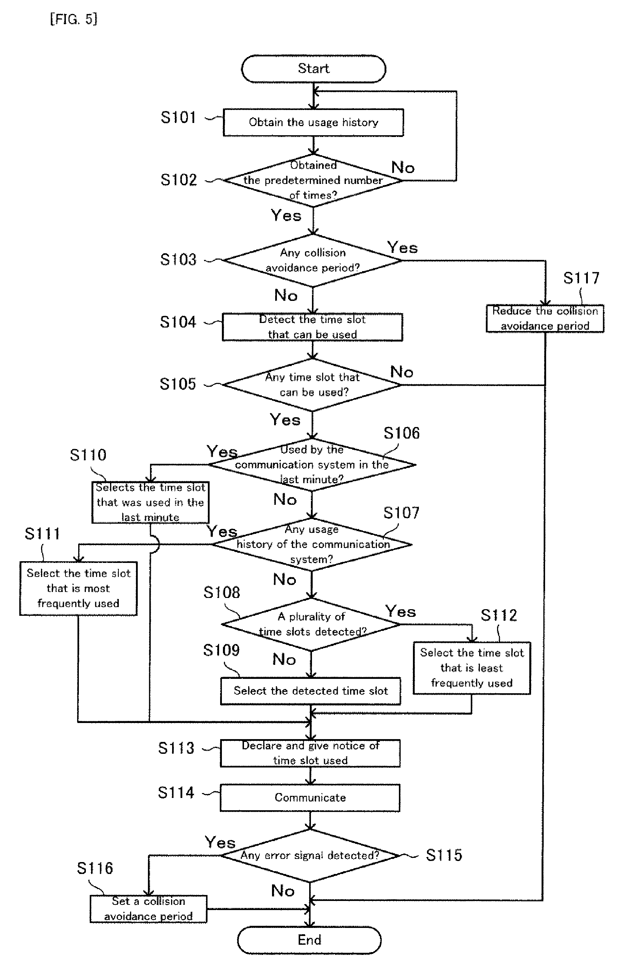

Next, the operations of the modem 11 in the communication system 1 as configured above will be explained by using a flowchart in FIG. 5. Incidentally, the operations of each of the modems 12 to 15 are the same as those of the modem 11, so that the explanation thereof will be omitted.

In FIG. 5, firstly, the usage history of the time slots 210 is obtained by the history obtaining part 102 and is stored into the memory 107 (step S101). Then, it is judged whether or not the usage history is obtained the predetermined number of times (e.g. 10 times) by the controlling part 109 (step S102), and if it is judged that it is not obtained (the step S102 : No), the controlling part 109 controls the history obtaining part 102 to obtain the usage history until reaching the predetermined number of times. Incidentally, cases where it is judged that it is not obtained are typically cases where the usage history is obtained for the first time after the modem 11 is started or the power line 4 is connected.

If it is judged that the usage history is obtained the predetermined number of times (the step S102: Yes), then, it is judged whether or not the collision avoidance period is set, or whether or not the collision avoidance period is not zero by the controlling part 109 (step S103). If it is judged that the collision avoidance period is set or is not zero (the step S103: Yes), the controlling part 109 reduces the collision avoidance period by a predetermined amount (e.g. a time corresponding to one cycle) (step S117), and the process is ended once.

If it is judged that the collision avoidance period is not set or is zero (the step S103: No), the time slot that can be used by the communication system I is detected by the region detecting part 101 (step S104). Then, it is judged whether or not the time slot that can be used is detected (step S105), and if it is not detected (the step S105: No), the process is ended once.

If the time slot that can be used by the communication system 1 is detected (the step S105: Yes), then, it is judged whether or not the time slot that was used by the communication system 1 in the last minute is included in the detected time slot (step S106). If it is judged that it is included (the step S106: Yes), the time slot that was used by the communication system I in the last minute is selected by the selecting part 103 as the time slot that is used by the communication system 1 (step S110).

If it is judged that it is not included (the step S106: No), then, it is judged whether or not there is the usage history that was used by the communication system 1 in the usage history stored in the memory 107 (step S107). If it is judged that there is the usage history that was used by the communication system 1 (the step S107: Yes), the time slot that is most frequently used by the communication system 1 is selected by the selecting part 103 as the time slot that is used by the communication system 1 (step S111).

If it is judged that there is no usage history that was used by the communication system 1 (the step S107: No), then, it is judged whether or not a plurality of time slots that can be used by the communication system 1 are detected (step S108). If it is judged that the plurality of time slots are detected (the step S108: Yes), the least frequently used time slot is selected by the selecting part 103 as the time slot that is used by the communication system I (step S112), Incidentally, in this case, the time slot that was used by the communication system 2 or 3 does not have to be selected within the first predetermined period.

If it is judged that the plurality of time slots are not detected (the step S108: No), the detected time slot is selected by the selecting part 103 as the time slot that is used by the communication system 1 (step S109).

Then, the selected time slot is declared by the declaring part 104 to the communication systems 2 and 3 as the time slot that is used by the communication system 1, and each of the modems 11 to 15 which belong to the communication system 1 is notified of the declared time slot by the notifying part 105 (step S113). Then, the notified time slot is recognized by the recognizing part 106 as the time slot that is used by the communication system 1, and communication is performed by the transmitting / receiving part 110 in the recognized time slot (step S114).

Then, it is judged whether or not the error signal is detected by the collision detecting part 108 (step S115), and if it is judged that it is not detected (the step S115: No), the process is ended once. If it is judged that the error signal is detected (the step S115: Yes), a predetermined collision avoidance period is set (step S116), and the process is ended once.

Incidentally, the present invention is not limited to the aforementioned embodiment, but various changes may be made, if desired, without departing from the essence or spirit of the invention which can be read from the claims and the entire specification. A communication system and method, and a communication apparatus, which involve such changes, are also intended to be within the technical scope of the present invention.

## Claims

1. A communication system comprising a plurality of communication apparatuses for performing communication by using a power line, said communication system sharing the power line with other communication systems,
at least one of the plurality of communication apparatuses having:
an region detecting device for detecting a communicable region that can be used by said communication system, from a plurality of communicable regions divided at least by time;
a declaring device for declaring at least one potion of the detected communicable region, as a communicable region that is used by said communication system, to the other communication systems; and
a notifying device for notifying the plurality of communication apparatuses of the declared communicable region,
each of the plurality of communication apparatuses performing communication in the notified communicable region.

2. The communication system according to claim 1, wherein
said communication system is multiplexed in a time-division multiple access method with the other communication systems, and
the plurality of communicable regions region plurality of time regions obtained by dividing a predetermined time interval.

3. The communication system according to claim 1, wherein said declaring device includes:
a history obtaining device for obtaining a usage history which shows each of the plurality of communicable regions used; and
a selecting device for selecting the communicable region that is used by said communication system, from the detected communicable region on the basis of the obtained usage history.

4. The communication system according to claim 3, wherein said selecting device selects the communicable region which is less frequently used, from the detected communicable region on the basis of the obtained usage history.

5. The communication system according to claim 3, wherein said selecting device selects the communicable region which is frequently used by said communication system, from the detected communicable region on the basis of the obtained usage history.

6. The communication system according to claim 3, wherein said selecting device selects a portion excluding a communicable region that is used by the other communication systems within a first predetermined period, from the detectable communicable region on the basis of the obtained usage history.

7. The communication system according to claim 1, wherein said declaring device declares the communicable region that is used by said communication system, to the other communication systems at regular intervals.

8. The communication system according to claim 1, wherein
the at least one communication apparatus further has a collision detecting device for detecting collision of communication signals on the power line, and
if the collision is detected, said declaring device does not declare in a second predetermined period.

9. A communication apparatus for performing communication by using a power line, said communication system sharing the power line with other communication systems, said communication apparatus comprising:
an region detecting device for detecting a communicable region that can be used by said communication system, from a plurality of communicable regions divided at least by time;
a declaring device for declaring at least one portion of the detected communicable region, as a communicable region that is used by said communication system, to the other communication systems;
a recognizing device for recognizing the declared communicable region as the communicable region that is used by said communication system; and
a transmitting / receiving apparatus for transmitting /receiving communication signals in the recognized communicable region.

10. A communication method in a communication system comprising a plurality of communication apparatuses for performing communication by using a power line, said communication system sharing the power line with other communication systems, said communication method comprising:
an region detecting process of detecting a communicable region that can be used by said communication system, from a plurality of communicable regions divided at least by time;
a declaring process of declaring at least one portion of the detected communicable region, as a communicable region that is used by said communication system, to the other communication systems; and
a notifying process of notifying the plurality of communication apparatuses of the declared communicable region,
each of the plurality of communication apparatuses performing communication in the notified communicable region.
